# EUROPÄISCHE PATENTANMELDUNG

(11) **EP 1 798 515 A2**
(43) Veröffentlichungstag der Anmeldung: **20.06.2007**
(21) Anmeldenummer: 06025436.4
(22) Anmeldetag: 08.12.2006
(51) Int. Cl.: G01B 11/275

(54) **Mess- bzw. Referenzeinheit und Fahrwerkvermessung damit**

(30) Priorität: 15.12.2005 DE 102005060073
(71) Anmelder: Beissbarth GmbH, 80993 München (DE)
(72) Erfinder: Bux, Hermann, 80993 München (DE)
(74) Vertreter: Klunker . Schmitt-Nilson . Hirsch

(57) **Zusammenfassung**

Die erfindungsgemäße Mess- bzw. Referenzeinheit zum Ermitteln von Winkelstellungen der Räder eines Kfz-Fahrwerks oder von Messköpfen zueinander bei einem berührungslos messenden Fahrwerkvermessungssystem umfasst einen optischen Sensor (1) mit einer zugehörigen Optik (2) und eine Lichtquelle (4) zum Abstrahlen wenigstens eines Lichtstrahles (6) für die Radstellungsmessung in wenigstens einer in Fahrzeuglängs- bzw. Querrichtung gegenüberliegenden Mess- bzw. Referenzeinheit. Vor dem optischen Sensor (1) ist ein Strahlteiler (5) angeordnet, der einfallende Lichtstrahlen (10, 11) aus wenigstens zwei unterschiedlichen Richtungen auf den optischen Sensor (1) leitet und der einen von der Lichtquelle (4) ausgehenden Lichtstrahl (6) in zwei Teilstrahlen (61, 62) mit unterschiedlichen Richtungen aufteilt.

## Beschreibung

Die vorliegende Erfindung betrifft eine Mess- bzw. Referenzeinheit und ein Fahrwerkvermessungssystem, insbesondere zum Ermitteln der Winkelstellungswerte der Räder von Personenwagen und Nutzfahrzeugen.

Aus der DE-29344111 sind Fahrwerkvermessungssysteme bekannt, die horizontale Winkelmessungen längs und quer zum Fahrzeug durchführen. Bei allen Verfahren werden eigene Sensoren für die Messung der Winkel längs zum Fahrzeug sowie eigene Sensoren für die Messung der Winkel quer zum Fahrzeug verwendet. Solche Fahrwerkvermessungssysteme sind teuer, aufwendig zu fertigen und verhältnismäßig störanfällig.

Es ist daher Aufgabe der Erfindung, eine Mess- bzw. Referenzeinheit und ein Fahrwerkvermessungs-system anzugeben, die bzw. das kostengünstiger sowie einfacher zu fertigen ist und die bzw. das störungsfrei arbeitet.

Diese Aufgabe wird durch den Gegenstand der unabhängigen Patentansprüche gelöst. Vorteilhafte Weiterbildungen ergeben sich aus den Unteransprüchen.

Die erfindungsgemäße Mess- bzw. Referenzeinheit zum Ermitteln von Winkelstellungen der Räder eines Kfz-Fahrwerks oder von Messköpfen zueinander bei einem berührungslos messenden Fahrwerkvermessungssystem umfassend einen optischen Sensor, insbesondere einer Zeilen- oder Flächen-CCD oder einen Zeilen- oder Flächen-CMOS-Sensor, mit einer zugehörigen Optik und wenigstens einer Lichtquelle, insbesondere einer Infrarot-LED, zum Abstrahlen wenigstens eines Lichtstrahls für die Radstellungsmessung oder Fahrwerkvermessung in wenigstens einer in Fahrzeuglängs- bzw. Querrichtung gegenüberliegenden Vorrichtung, ist dadurch gekennzeichnet, dass vor dem optischen Sensor und der Lichtquelle ein Strahlteiler angeordnet ist, der so ausgebildet ist, dass er einfallende Lichtstrahlen aus wenigstens zwei unterschiedlichen Richtungen auf den optischen Sensor leitet und dass ein von der Lichtquelle ausgehender Lichtstrahl in zwei Teilstrahlen mit unterschiedlichen Richtungen aufteilbar ist.

Danach ermöglicht es der Strahlteiler, dass der optische Sensor ein Bild aus zwei unterschiedlichen Richtungen aufnehmen kann und dass zwei Lichtstrahlen mit einer einzigen Lichtquelle in unterschiedliche Richtungen ausgesendet werden können, sodaß gegenüber dem sog. 8-Geber-System, wie es beispielsweise aus AU-B-11482/95, US-A-5 220 399, US-A-4 718 759 und US-A-4 402 603 bekannt ist, vier Geber eingespart werden können.

Gemäß einem weiteren Grundgedanken der Erfindung kann eine derartige Mess- bzw. Referenzeinheit mit einem einzigen optischen Sensor Bilder von zwei in einer horizontalen Ebene liegenden, im wesentlichen orthogonal zueinander angeordneten Lichtquellen oder Mess- bzw. Referenzeinheiten erfassen.

Es ist dabei insbesondere möglich, mit lediglich einem optischen Sensor und lediglich einer Lichtquelle sowohl eine Winkelmessung am Rad längs zum Fahrzeug als auch eine Winkelmessung quer zum Fahrzeug durchzuführen. Die erfindungsgemäße Mess- bzw. Referenzeinheit ersetzt somit zwei derzeit übliche auch aus der EP 1 184 640 bekannte Sensoren. Durch eine Verwendung von lediglich vier erfindungsgemäßen Mess- bzw. Referenzeinheiten mit insgesamt vier optischen Sensoren und vier Lichtquellen zur Fahrwerksvermessung lassen sich die Räder eines Personenwagens oder Nutzfahrzeugs vermessen. Im Vergleich zu bisher bekannten Messvorrichtungen und Messverfahren kann die Anzahl der Sensoren und Lichtquellen somit von acht auf vier reduziert werden. Somit können die Herstellungskosten gesenkt und die Störanfälligkeit von Fahrwerksvermessungssystemen sowie der Energieverbrauch, insbesondere bei Batterie-Akkugeräten reduziert werden, zumal weniger Sensoren zum Einsatz kommen.

Wenn die Lichtquelle bei der Optik des optischen Sensors angeordnet ist, ergibt sich eine besonders kompakte Bauform der Mess- bzw. Referenzeinheit.

Bei einer alternativen Ausführungsform der erfindungsgemäßen Mess- bzw. Referenzeinheit wird für jede Richtung jeweils eine separate Lichtquelle vorgesehen. Der Strahlteiler ist dabei ebenfalls vor dem optischen Sensor angeordnet und leitet einfallende Lichtstrahlen aus wenigstens zwei unterschiedlichen Richtungen auf den optischen Sensor. Die Lichtquellen sind jedoch hinter dem Strahlteiler angeordnet und der von ihnen ausgesendete Lichtstrahl verläuft nicht durch den Strahlteiler. Wenigstens eine längs zum optischen Sensor ausgerichtete erste Lichtquelle, insbesondere eine Infrarot-LED strahlt einen Lichtstrahl für die Fahrwerksvermessung bzw. Radstellungsmessung in einer dem optischen Sensor in Längsrichtung gegenüberliegenden Mess- bzw. Referenzeinheit aus. Wenigstens eine quer zum optischen Sensor ausgerichtete zweite Lichtquelle, insbesondere eine Infrarot-LED strahlt einen weiteren Lichtstrahl für die Fahrwerksvermessung bzw. Radstellungsmessung in einer dem optischen Sensor in Querrichtung gegenüberliegenden Mess- bzw. Referenzeinheit aus. Beide Lichtquellen liegen außerhalb des Strahlengangs der auf den optischen Sensor einfallenden Lichtstrahlen.

Gemäß einem Grundgedanken der Erfindung ermöglicht es ein solcher Strahlteiler, dass der optische Sensor ein Bild aus zwei unterschiedlichen Richtungen aufnehmen kann.

Eine derartige erfindungsgemäße Mess- bzw. Referenzeinheit ist für Vermessungen über größere Entfernungen zu bevorzugen, zumal der Lichtstrahl von der Lichtquelle nicht durch den Strahlteiler geleitet wird und somit dessen Strahlleistung nicht gemindert wird.

Eine derartige erfindungsgemäße Mess- bzw. Referenzeinheit ist ebenfalls günstig herstellbar und reduziert die Störanfälligkeit, zumal im Vergleich zu üblichen Fahrwerkvermessungssystemen vier optische Sensoren eingespart werden können.

Zusätzlich zu der ersten und der zweiten Lichtquelle können noch längs und quer zum optischen Sensor ausgerichtete Nebenlichtquellen, insbesondere Infrarot-LED's vorgesehen werden, die jeweils einen Lichtstrahl für die Fahrwerksvermessung bzw. Radstellungsmessung in einer dem optischen Sensor in Längs- bzw. Querrichtung gegenüberliegenden Mess- bzw. Referenzeinheit ausstrahlen. Diese Nebenlichtquellen sind ebenfalls nach dem Strahlteiler und ausserhalb des Strahlengangs der auf den optischen Sensor einfallenden Lichtstrahlen anzuordnen. Wenn insgesamt zwei Lichtquellen pro Richtung vorgesehen werden, wird über eine Triangulation mit der jeweils gegenüberliegenden Mess- bzw. Referenzeinheit eine Entfernungsmessung zwischen jeweils zwei Mess- bzw. Referenzeinheiten ermöglicht. Prinzipiell sind für die Winkel- und die Abstandsmessung insgesamt zwei Lichtquellen pro Richtung ausreichen, es können jedoch auch mehr Lichtquellen pro Richtung vorgesehen werden.

Die nachfolgenden vorteilhaften Weiterbildungen der erfindungsgemäßen Mess- bzw. Referenzeinheit können bei beiden Versionen realisiert werden, nämlich zum einen bei der Mess- bzw. Referenzeinheit, bei der erfindungsgemäß der von der Lichtquelle ausgehende Lichtstrahl von dem Strahlteiler in zwei Teilstrahlen mit unterschiedlicher Richtung aufgeteilt wird, und zum anderen bei der Mess- bzw. Referenzeinheit, bei dem erfindungsgemäß jeweils mindestens eine Lichtquelle pro Richtung vorgesehen wird, deren Lichtstrahl nicht durch den Strahlteiler verläuft.

In einer vorteilhaften Weiterbildung der Erfindung ist die erfindungsgemäße Mess- bzw. Referenzeinheit von einem Gehäuse umgeben, das jeweils eine Öffnung in Längs- und in Querrichtung für die einfallenden und ausgehenden Lichtstrahlen aufweist.

Wenn die Lichtquellen an oder bei dem Gehäuse angeordnet sind, ergibt sich eine besonders kompakte Bauform der Mess- bzw. Referenzeinheit.

Der Strahlteiler kann in vorteilhafter Weise als halbdurchlässiger Spiegel oder als Teilerwürfel ausgebildet sein.

Wenn der Strahlteiler in einem Winkel von 45° zum optischen Sensor angeordnet ist, so können ausgehende Lichtstrahlen genau in Quer- und Längsrichtung gelenkt werden.

Die Stör- und Streulichteinflüsse können deutlich reduziert und dementsprechend können die Messergebnisse deutlich verbessert werden, wenn der Strahleintrittswinkel der Längs- und der Queröffnung des Gehäuses jeweils durch einen Tubus begrenzt wird.

Die Streu- und Störlichteinflüsse können noch weiter reduziert werden, wenn jeder Tubus an einem Ende mit einem optischen Filter verschlossen ist.

Alternativ oder zusätzlich zum Vorsehen jeweils eines Tubus an der Quer- und Längsöffnung des Gehäuses kann der optische Sensor zur Reduzierung von Fremd- oder Störlichteinflüssen auch in einem optisch abgeschatteten Teilbereich angeordnet sein, der eine Öffnung für den Strahlengang aufweist.

Auch bei dieser Ausführungsform der Erfindung kann noch ein optischer Filter, insbesondere ein Tageslichtfilter vor der Öffnung des optisch abgeschatteten Teilbereichs angeordnet werden, um Fremd- und Störlichteinflüsse weiter zu reduzieren.

Eine weitere Ausführungsform der Erfindung ist dadurch gekennzeichnet, dass im Gehäuse ein zusätzlicher einachsiger Neigungsgeber integriert ist, der den Verkippungswinkel des optischen Sensors zur Senkrechten in Querrichtung misst.

Eine weitere Ausführungsform der Erfindung ist dadurch gekennzeichnet, dass im Gehäuse ein zusätzlicher zweiachsiger Neigungsgeber integriert ist, der den Verkippungswinkel des optischen Sensors zur Senkrechten in Querrichtung und in Längsrichtung misst. Alternativ dazu können im Gehäuse zwei einachsige Neigungsgeber integriert sein, die ihrer Messrichtung um 90° zueinander gedreht sind und die den Verkippungswinkel des optischen Sensors zur Senkrechten in Querrichtung und in Längsrichtung messen.

Wenn im Gehäuse Neigungsgeber zu zwei Achsen integriert sind, kann zusätzlich zu den horizontalen Winkeln gleichzeitig auch die Verkippung des Sensors zur Senkrechten in der Ebene längs zum Fahrzeug und in der Ebene quer zum Fahrzeug gemessen werden. Dadurch kann die Funktionalität der erfindungsgemäßen Mess- bzw. Referenzeinheit weiter erhöht werden.

Die Erfindung betrifft des weiteren einen Messkopf einer Fahrwerkvermessungsvorrichtung mit einer Halterung, mit einem Spannmittel zum Befestigen der Halterung an einem Fahrzeugrad, mit einer an einem Ausleger befestigte Messeinheit der o.g. Art sowie mit einem gegenüber der Messeinheit angeordneten Gegengewicht.

Ferner betrifft die Erfindung auch ein Fahrwerksvermessungssystem mit vier einander jeweils gegenüberliegenden erfindungsgemäßen Messköpfen der o.g. Art, die jeweils an einem Fahrzeugrad befestigt sind. Dabei sind die Messköpfe so angeordnet, dass Lichtstrahlen von den jeweils in Längs- und in Querrichtung gegenüberliegenden Messköpfen auf ihren optischen Sensor treffen.

Die Erfindung betrifft des weiteren einen berührungslos messenden Messkopf mit einem berührungslos messenden Messwertaufnehmer zur Anordnung neben einem Fahrzeugrad, wobei der Messwertaufnehmer wenigstens eine Messkamera zum Erfassen eines charakteristischen Merkmals des Rads oder eines am Rad angebrachten Messtargets zur Bestimmung der räumlichen Lage des Rads gegenüber dem Messwertaufnehmer aufweist; und mit einer in einer definierten Lage zu dem berührungslos messenden Messwertaufnehmer angeordneten Referenzeinheit der o.g. Art zur Bestimmung der Winkellagen der Messköpfe bzw. Messwertaufnehmer zueinander. Dabei ist es besonders vorteilhaft, wenn die erfindungsgemäßen Messköpfe als Bezugs- oder Referenzsystem für das Messsystem der Fahrwerksvermessung verwendet werden können.

Eine weitere vorteilhafte Ausführungsform der Erfindung ist dadurch gekennzeichnet, dass der berührungslose Messwertaufnehmer zwei zueinander leicht schräg montierte Messkameras aufweist, die von einer Vielzahl von Infrarot-LEDs umgeben sind.

Weiterhin betrifft die Erfindung ein Fahrwerksvermessungssystem mit vier einander jeweils gegenüberliegenden, berührungslos messenden Messköpfen der o.g. Art.

Ausführungsbeispiele der Erfindung werden nachfolgend mit Bezug auf die Figuren 1-8 näher erläutert.
- Fig. 1: zeigt eine schematische Darstellung eines ersten erfindungsgemäßen Fahrwerksvermessungssystems;
- Fig. 2: zeigt eine vergrößerte schematische Draufsicht auf die vordere linke Messeinheit aus Fig. 1 gemäß einem ersten Ausführungsbeispiel;
- Fig. 3: zeigt eine vergrößerte schematische Draufsicht auf die vordere linke Messeinheit aus Fig. 1 gemäß einem zweiten Ausführungsbeispiel;
- Fig. 4: zeigt eine vergrößerte schematische Draufsicht auf die vordere linke Messeinheit aus Fig. 1 gemäß einem dritten Ausführungsbeispiel;
- Fig. 5: zeigt eine vergrößerte schematische Draufsicht auf die vordere linke Messeinheit aus Fig. 1 gemäß einem vierten Ausführungsbeispiel;
- Fig. 6: zeigt eine vergrößerte schematische Draufsicht auf die vordere linke Messeinheit aus Fig. 1 gemäß einem fünften Ausführungsbeispiel;
- Fig. 7: zeigt eine vergrößerte schematische Draufsicht auf die vordere linke Messeinheit aus Fig. 1 gemäß einem sechsten Ausführungsbeispiel;
- Fig. 8: zeigt eine schematische Darstellung eines zweiten erfindungsgemäßen Fahrwerksvermessungssystems; und
- Fig. 9: zeigt eine vergrößerte schematische Ansicht des Ausschnitts VIII aus Fig. 8.

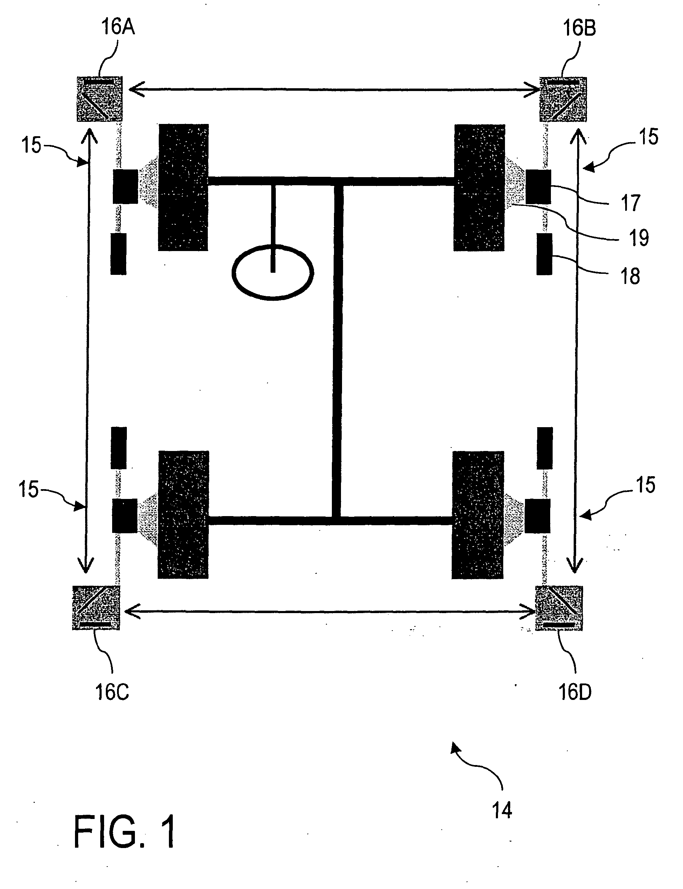

Fig. 1 zeigt eine schematische Darstellung eines ersten erfindungsgemäßen Fahrwerksvermessungssystems 14.

In Fig. 1 ist ein Fahrwerk eines Personenwagens zu erkennen, an dessen Fahrzeugrädern jeweils erfindungsgemäße Messköpfe 15 angebracht sind. Die in Fig. 1 gezeigten Messköpfe 15 umfassen jeweils eine Halterung 17, die mittels einem Spannmittel 19, das in Fig. 1 schematisch direkt neben der Halterung 17 dargestellt ist, an dem jeweiligen Fahrzeugrad befestigt ist, jeweils eine nachfolgend als Messeinheit bezeichnete Vorrichtung zum Ermitteln von Winkelstellungen, die jeweils diagonal vor bzw. hinter den Fahrzeugrädern angeordnet und mit den Bezugszeichen 16A, 16B, 16C und 16D versehen ist, sowie Gegengewichte 18.

In einen alternativen, hier nicht gezeigten Ausführungsbeispiel können die Messeinheiten 16A, 16B, 16C und 16D auch zwischen den Fahrzeugrädern angeordnet sein. Die Gegengewichte 18 können bei kabellosen Radstellungsmessvorrichtungen die Batterien oder Akkumulatoren sein.

In den Halterungen 17 der Messköpfe 15 kann jeweils ein Sensorkopf 17 mit einer üblichen Elektronikeinheit und mit den üblichen Bedienelementen angeordnet werden. Diese sind dem Fachmann bekannt und brauchen hier nicht weiter erläutert zu werden. Die Gegengewichte 18 dienen jeweils für den Gewichtsausgleich zu den Messeinheiten 16A, 16B, 16C und 16D.

Ebenfalls nicht dargestellt ist ein Computersystem, an das die ermittelten Messwerte drahtlos oder per Kabel zur Auswertung und Anzeige übertragen werden.

Mittels längs und quer in Fahrzeugrichtung verlaufenden Pfeilen in Fig. 1 ist der Verlauf der Lichtstrahlen zwischen den Messeinheiten 16A, 16B, 16C und 16D skizziert.

In den folgenden Figuren werden die Begriffe "vorne" und "hinten" bezüglich des optischen Sensors 1 und die Begriffe "oben" und "unten" als senkrecht zur Zeichenebene verwendet.

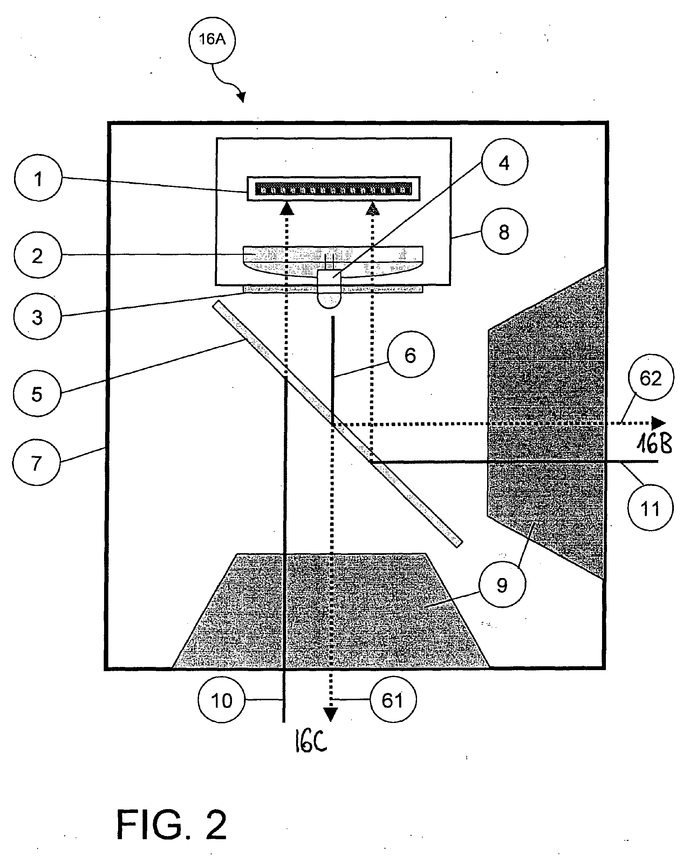

Fig. 2 zeigt eine vergrößerte schematische Draufsicht auf die vordere linke Messeinheit 16A aus Fig. 1 gemäß einem ersten Ausführungsbeispiel.

Bei der in Fig. 2 und in den weiteren Figuren gezeigten Messeinheiten handelt es sich um eine vergrößerte Darstellung der in Fig. 1 oben links gezeigten Messeinheit 16A.

Die Messsensorik der Messeinheit 16A ist von einem hier rechteckig gezeigten Gehäuse 7 umschlossen. In dieser und den folgenden Darstellungen der Messeinheit 16A ist dabei die obere Abdeckung des Gehäuses 7 abgenommen.

Die Messeinheit 16A umfasst einen optischen Sensor 1 mit einer zugehörigen Optik 2, die beide in einem vom Umgebungslicht abgeschatteten Sensorgehäuse 8 angeordnet sind. Das Sensorgehäuse 8 weist eine Sichtöffnung auf, die mit einem optischen Filter 3, vorzugsweise einem Tageslichtfilter verschlossen ist. Oberhalb bzw. unterhalb der Sichtöffnung ist eine Lichtquelle 4, vorzugsweise eine Infrarot-Leuchtdiode LED vorgesehen. Das Sensorgehäuse 8 ist in einem hinteren Bereich des Gehäuses 7 angeordnet.

In dem Gehäuse 7 befindet sich ein Strahlteiler 5, der in einem Winkel von 45° zur optischen Achse des optischen Sensors 1 und der Lichtquelle 4 angeordnet ist. Der Strahlteiler 5 ist gemäß den Ausführungsbeispielen von Fig. 2 und den nachfolgenden Figuren angeordnet und als halbdurchlässiger Spiegel ausgebildet.

Im Bereich der Sichtlinien 10 und 11 der Messsensorik befinden sich nach vorne und zur Seite Öffnungen im Gehäuse 7. In beiden Öffnungen ist jeweils ein Tubus 9 eingesetzt, der die Strahleintrittswinkel beider Öffnungen zur Reduzierung von Stör- und Streulichteinflüssen begrenzt.

Von der Lichtquelle 4 wird ein ausgehender Lichtstrahl 6 abgegeben, der auf dem Strahlteiler 5 teils reflektiert und teils durchgelassen wird. Der ausgehende Lichtstrahl 6 wird somit in einen Teilstrahl 61 längs zum optischen Sensor 1 und in einen Teilstrahl 62 quer zum optischen Sensor 1 aufgeteilt. Der Teilstrahl 61 längs zum optischen Sensor 1 dient zur Abbildung in der in Fig. 1 unten links dargestellten Messeinheit 16C, die sich gegenüber der in Fig. 2 gezeigten Messeinheit 16A befindet. Der Teilstrahl 62 quer zum optischen Sensor 1 dient zur Abbildung in der in Fig. 1 oben rechts gezeigten Messeinheit 16B, die sich rechts neben der in Fig. 2 gezeigten Messeinheit 16A befindet. Diese beiden weiteren Messeinheiten 16B und 16C sind jeweils spiegelbildlich zu der in Fig. 2 gezeigten Messeinheit 16A aufgebaut und, wie in Figur 1 dargestellt, mit ihren Öffnungen einander zugewandt.

Von den beiden weiteren Messeinheiten 16B und 16C wird jeweils ein Lichtstrahl aus Längsrichtung 10 und ein Lichtstrahl aus Querrichtung 11 abgegeben. Der Lichtstrahl aus Längsrichtung 10 tritt durch die vordere Öffnung und den Tubus 9 in das Gehäuse 7 ein und wird zu einem Teil von dem Strahlteiler 5 durchgelassen. Der andere Anteil des Lichtstrahls aus Längsrichtung 10 wird am Strahlteiler 5 nach links weg reflektiert. Der durch den Strahlteiler 5 durchgehende Lichtstrahl aus Längsrichtung 10 tritt durch den optischen Filter 3 in das Sensorgehäuse 8 ein und wird weiter durch die Optik 2 auf den optischen Sensor 1 geleitet.

Der Lichtstrahl aus Querrichtung 11 tritt durch die seitliche Öffnung und den Tubus 9 in das Gehäuse 7 ein und trifft auf den Strahlteiler 5 auf, wo er zu einem Teil in Richtung des optischen Sensors 1 reflektiert wird. Der andere Anteil des Lichtstrahls aus Querrichtung 11 wird durch den Strahlteiler 5 durchgelassen. Anschließend tritt der durch den Strahlteiler 5 reflektierte Lichtstrahl aus Querrichtung 11 durch den optischen Filter 3 in das Sensorgehäuse 8 ein und wird von der Optik 2 auf den optischen Sensor 1 geleitet.

Der Strahlteiler 5 befindet sich somit im Strahlengang des optischen Sensors 1 und der Lichtquelle 4.

Durch den Strahlteiler 5 ist der optische Sensor 1 in der Lage, ein Bild 10 längs zum optischen Sensor und ein Bild 11 quer zum optischen Sensor aufzunehmen.

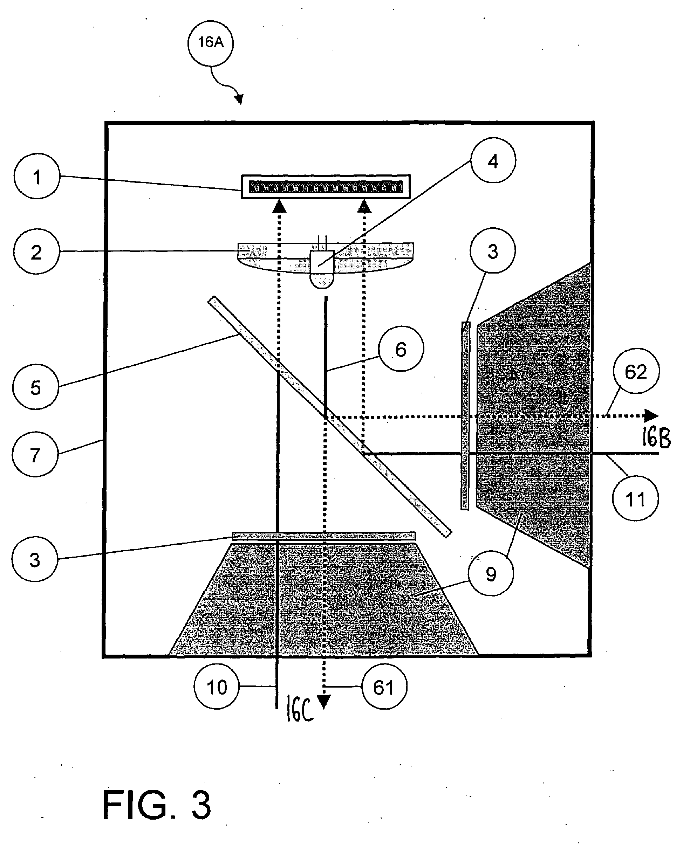

Fig. 3 zeigt eine vergrößerte schematische Draufsicht auf die vordere linke Messeinheit 16A aus Fig. 1 gemäß einem zweiten Ausführungsbeispiel.

Im Unterschied zu Fig. 2 ist bei der Messeinheit 16A gemäß Fig. 3 hinter dem Längstubus 9 und links neben dem Quertubus 9 jeweils ein optischer Filter 3 vorgesehen. Diese optischen Filter 3 verschließen somit beide Tuben 9. Diese beiden optischen Filter 3 ersetzen das Sensorgehäuse 8 und den vor dem Sensorgehäuse 8 in Fig. 2 angeordneten optischen Filter 3. Bei dem Ausführungsbeispiel der Messeinheit 16A gemäß Fig. 3 kann somit das getrennte Abschatten des optischen Sensors 1 gegen Fremdlicht durch das Sensorgehäuse 8 entfallen.

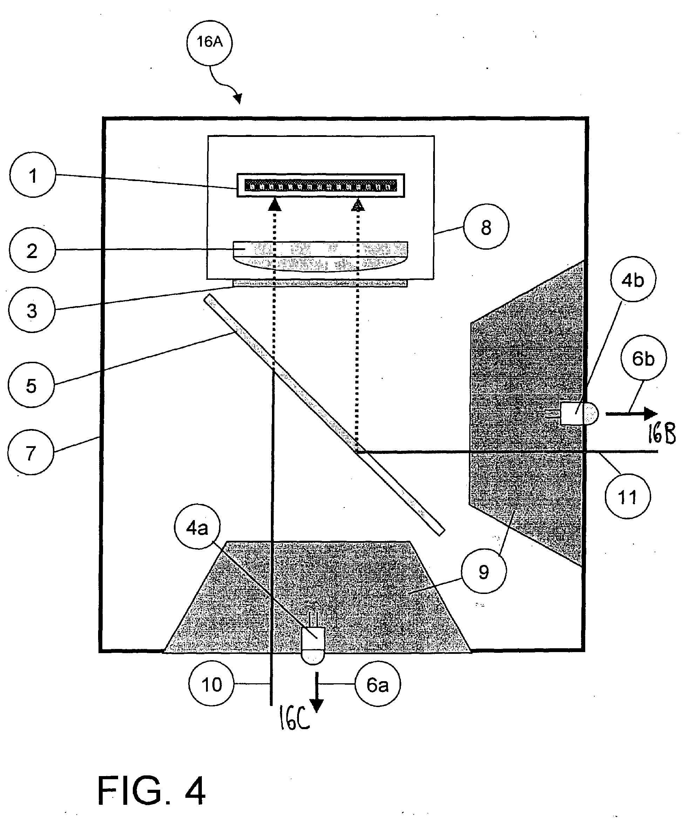

Fig. 4 zeigt eine vergrößerte schematische Draufsicht auf die vordere linke Messeinheit 16A aus Fig. 1 gemäß einem dritten Ausführungsbeispiel.

Dabei ist die hinter dem Strahlteiler 5 angeordnete Lichtquelle 4 durch zwei bezüglich des Strahlengangs vor dem Strahlteiler 5 angeordnete Lichtquellen 4a und 4b ersetzt worden, nämlich der Lichtquelle 4a in Längsrichtung, die längs zum optischen Sensor 1 angeordnet ist und der Lichtquelle 4b in Querrichtung, die quer zum optischen Sensor 1 angeordnet ist. Beide Lichtquellen 4a und 4b befinden sich nach dem Strahlteiler 5 und sind so oberhalb oder unterhalb des Strahlteilers 5 angeordnet und an oder bei dem Gehäuse 7 befestigt, dass sie den Strahlengang des optischen Sensors 1 nicht behindern.

Die erste Lichtquelle 4a sendet einen ersten ausgehenden Lichtstrahl 6a nach vorne hin aus, und die zweite Lichtquelle 4b sendet einen zweiten ausgehenden Lichtstrahl 6b in seitlicher Richtung aus.

Bei der Anordnung der Lichtquellen 4a und 4b gemäß dem Ausführungsbeispiel in Fig. 4 bleibt die volle Strahlleistung der Lichtquellen 4a und 4b in Quer- und Längsrichtung zu den Messeinheiten 16B und 16C erhalten. Dementsprechend ist die Messeinheit 16A gemäß dem dritten Ausführungsbeispiel bei Vermessungen über größere Entfernungen zu bevorzugen, wohingegen die Messeinheiten 16A gemäß dem ersten und dem zweiten Ausführungsbeispiel noch kostengünstiger herstellbar sind, zumal nur eine Lichtquelle 4 pro Messeinheit 16A vorgesehen ist.

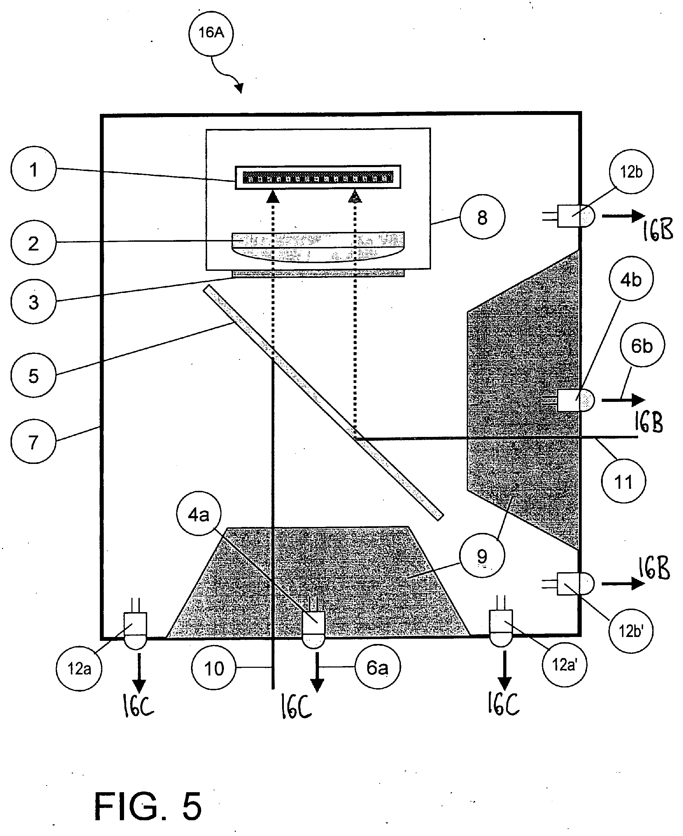

Fig. 5 zeigt eine vergrößerte schematische Draufsicht auf die vordere linke Messeinheit 16A auf Fig. 1 gemäß einem vierten Ausführungsbeispiel.

Die Messeinheit 16A gemäß Fig. 5 entspricht hinsichtlich ihres Aufbaus der in Fig. 4 gezeigten Messeinheit, wobei zusätzlich links und rechts neben der Hauptlichtquelle in Längsrichtung 4a zwei weitere Nebenlichtquellen in Längsrichtung 12a und 12a' und vor und hinter der Hauptlichtquelle in Querrichtung 4b zwei weitere Nebenlichtquellen in Querrichtung 12b und 12b' am oder beim Gehäuse 7 angebracht sind.

Mit Hilfe dieser zusätzlich vorgesehenen Nebenlichtquellen 12a und 12a' sowie 12b und 12b' wird über eine Triangulation mit der jeweils gegenüberliegenden Messeinheit 16B bzw. 16C eine Entfernungsmessung zwischen jeweils zwei Messeinheiten 16A und 16B bzw. 16A und 16C ermöglicht. Prinzipiell sind für die Winkel- und die Abstandsmessung insgesamt zwei Lichtquellen pro Richtung ausreichend.

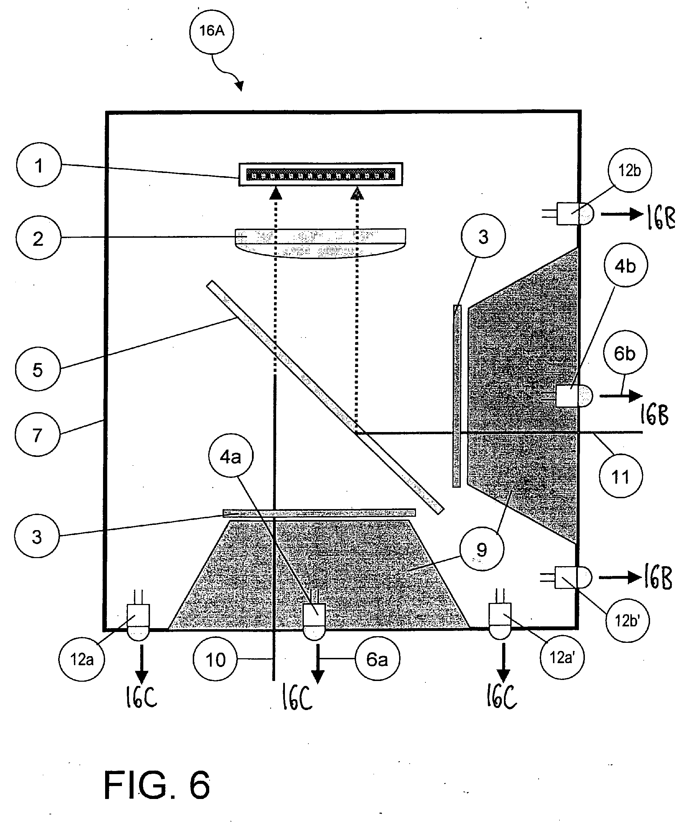

Fig. 6 zeigt eine vergrößerte schematische Draufsicht auf die vordere linke Messeinheit 16A aus Fig. 1 gemäß einem fünften Ausführungsbeispiel.

Die Messeinheit 16A gemäß Fig. 6 entspricht prinzipiell der in Fig. 5 gezeigten Messeinheit 16A, wobei jedoch wie bei der Messeinheit 16A gemäß Fig. 3 das Sensorgehäuse 8 und der am Sensorgehäuse 8 angeordnete optische Filter 3 durch jeweils direkt hinter den Tuben 9 angeordnete optische Filter 3 ersetzt worden sind. Diese optischen Filter 3 verschließen die beiden Tuben 9. Durch das Vorsehen dieser beiden optischen Filter 3 entfällt das getrennte Abschatten des optischen Sensors 1 gegen Fremdlicht durch das Sensorgehäuse 8.

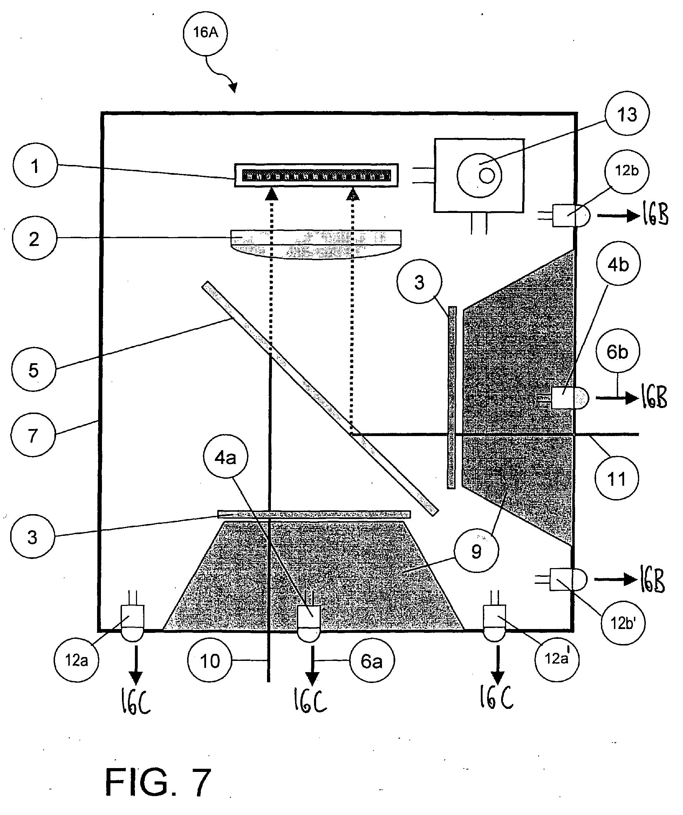

Fig. 7 zeigt eine vergrößerte schematische Draufsicht auf die vordere linke Messeinheit 16A aus Fig. 1 gemäß einem sechsten Ausführungsbeispiel.

Die Messeinheit 16A in Fig. 7 entspricht im wesentlichen der in Fig. 6 gezeigten Messeinheit 16A, wobei innerhalb des Gehäuses 7 zusätzlich ein Neigungsgeber 13 eingebaut ist. Dieser Neigungsgeber 13 ermöglicht die Messung des Verkippungswinkels der Messeinheit 16A zur Senkrechten in Quer- und/oder Längsrichtung. Der Neigungsgeber 13 kann als ein- oder zweiachsiger Inklinometer ausgeführt sein. Es kann sich hierbei, wie in Fig. 7 gezeigt, um einen getrennten Sensor handeln oder auch um eine Kombination aus einem optischen Sensor und einem einachsigen Pendel, wie sie dem Fachmann bekannt ist. Alternativ zum zweiachsigen Inklinometer können auch zwei einachsige Inklinometer verwendet werden, die ihrer Messrichtung um 90° zueinander gedreht sind.

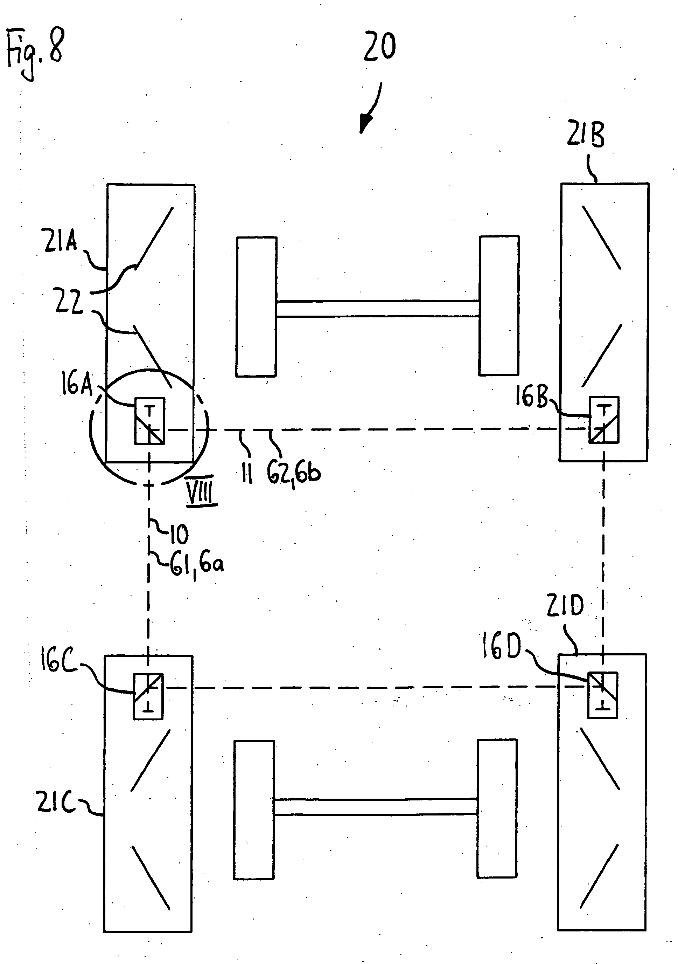

Fig. 8 zeigt eine schematische Darstellung eines zweiten erfindungsgemäßen Fahrwerksvermessungs-systems 20.

Wie in Fig. 1 ist auch hier ein Fahrwerk eines Personenwagens zu erkennen. Neben den Fahrzeugrädem sind jeweils erfindungsgemäße Messköpfe 21A, 21B, 21C und 21D angeordnet. Diese verfügen jeweils über einen berührungslosen Messwertaufnehmer 22, der jeweils zwei in Fig. 8 angedeutete zueinander leicht schräg montierte Messkameras aufweist, die auf das jeweilige Fahrzeugrad ausgerichtet sind. Die berührungslosen Messwertaufnehmer 22 sind Bestandteil des Messsystems. Die Messkameras sind von einer Vielzahl von Infrarot-LEDs umgeben, welche das Fahrzeugrad und insbesondere die Felge des Fahrzeugrads ausleuchten, so dass die Messkameras ein charakteristisches Merkmals des Rads oder eines am Rad angebrachten Messtargets zur Bestimmung der räumlichen Lage des Rads gegenüber dem Messkopf 21A, 21B, 21C und 21 D aufnehmen können.

Die Vorrichtung und das Verfahren zum berührungslosen Messen und Ermitteln der räumlichen Lage einer Radfelge ist dem Fachmann beispielsweise aus der DE 10 2004 013 441 A1 bekannt und braucht hier nicht näher erläutert werden.

Die Messköpfe 21A-D verfügen des weiteren über jeweils eine Referenzeinheit 16A-D, die wie die Messeinheiten 16A-D gemäß der vorstehend beschriebenen Ausführungsbeispiele ausgebildet ist.

Der Verlauf der Lichtstrahlen zwischen den Referenzeinheiten 16A-D der Messköpfe 21A-D ist in Fig. 8 mittels gestrichelter Linien dargestellt. Wie in Fig. 8 gut zu sehen ist, sind die Referenzeinheiten 16A-D so angeordnet, dass die von ihnen ausgesendeten und zu empfangenden Lichtstrahlen in Querrichtung unterhalb des Fahrzeugs zwischen den Fahrzeugrädern verlaufen. Die in Längsrichtung ausgesendeten und zu empfangenden Lichtstrahlen verlaufen wie bei dem ersten Fahrwerksvermessungssystem 14 in Längsrichtung neben dem Fahrzeug.

Die Referenzeinheiten 16A-D bilden dabei das Bezugs- oder Referenzsystem für das zweite Fahrwerksvermessungssystem 20, mit Hilfe derer eine Verdrehung der Messköpfe 21A-D zueinander sowie eine Verkippung oder Neigung der Messköpfe 21A-D erkannt und in die Berechnungen des Messsystems einbezogen werden kann.

Das in Fig. 8 gezeigte zweite Fahrwerksvermessungssystem 20 verfügt des weiteren über ein nicht dargestelltes Computersystem, an das die Messwerte der Referenzeinheiten 16A-D und der berührunglosen Messwertaufnehmer 22 drahtlos oder per Kabel zur Auswertung und Anzeige übertragen werden.

Die Referenzeinheit 16A des vorderen linken Messkopfs 21A ist von einem gestrichelten Kreis VIII umgeben.

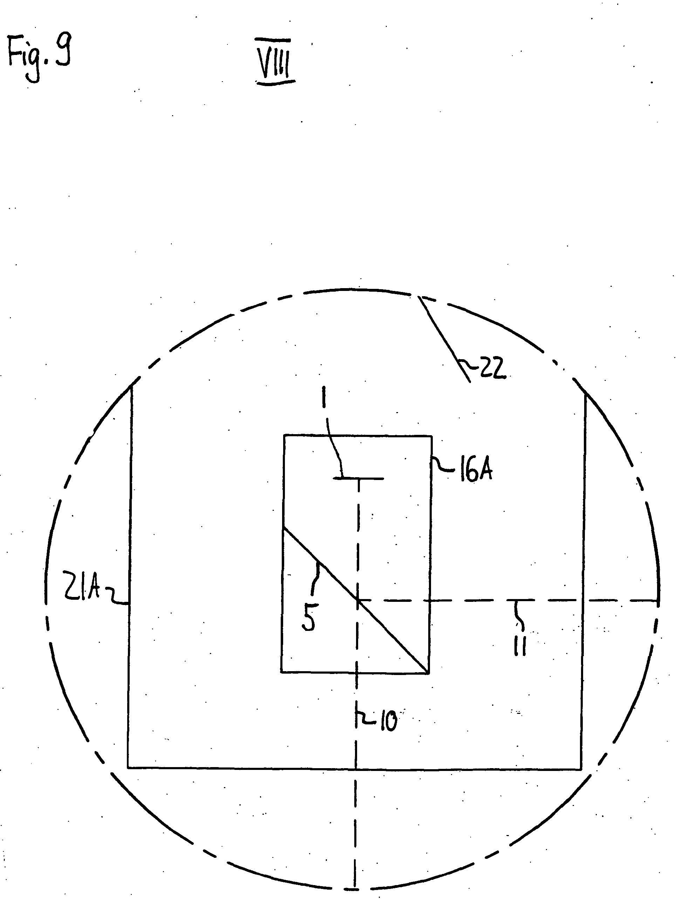

Fig. 9 zeigt eine vergrößerte schematische Draufsicht auf den Ausschnitt VIII aus Fig. 8.

Dabei ist der optische Sensor 1 mit dem Strahlteiler 5 der Referenzeinheit 16A zu erkennen. Der Strahlteiler ist in einem Winkel von 45° zur optischen Achse des optischen Sensors 1 angeordnet. Des weiteren ist gut zu sehen, wie der Lichtstrahl aus Längsrichtung 10, der von der Referenzeinheit 16C des linken hinteren Messkopfs 16C aus Fig. 8 ausgesendet wird, von vorne auf den Strahlteiler 5 auftrifft, durch diesen hindurch geht und auf den optischen Sensor 1 gelangt. Weiterhin ist gut zu erkennen, wie der Lichtstrahl aus Querrichtung 11, der von der Referenzeinheit 16B des vorderen rechten Messkopfs 21 B auf den Strahlteiler 5 auftrifft, und von diesem so abgelenkt wird, dass er auf den optischen Sensor 1 gelangt. Die von dem Strahlteiler 5 nach links abgelenkten oder durchgelassenen Teilstrahlen sind in Fig. 9 nicht dargestellt.

In den Fig. 8 und 9 ist die Lichtquelle 4 bzw. sind die Lichtquellen 4a und 4b in Längs- und Querrichtung, sowie die von diesen Lichtquellen 4 bzw. 4a und 4b ausgehenden Lichtstrahlen 6 bzw. 6a und 6b nicht explizit dargestellt. Der Verlauf der Teilstrahlen 61 und 62 des ausgehenden Lichtstrahls 6 bzw. der ausgehenden Lichtstrahlen 6a und 6b entspricht dem in Fig. 8 durch die gestrichelten Linien gezeigten Lichtstrahlenverlauf 10 und 11.

Das Vorsehen eines Neigungsgebers 13 ist insbesondere dann erforderlich, wenn die sich die Messköpfe 15 bzw. 21A-D der in den Figuren 1 und 8 gezeigten Fahrwerksvermessungssysteme 14 und 20 nicht in einer horizontalen Ebene befinden, sondern eine Neigung oder Verkippung zur horizontalen Ebene aufweisen.

### Bezugszeichenliste:

- 1: optischer Sensor
- 2: Optik
- 3: optischer Filter
- 4: Lichtquelle
- 4a: Lichtquelle/Hauptlichtquelle in Längsrichtung
- 4b: Lichtquelle/Hauptlichtquelle in Querrichtung
- 5: Strahlteiler
- 6: ausgehender Lichtstrahl
- 61: erster Teilstrahl
- 62: zweiter Teilstrahl
- 6a: erster ausgehender Lichtstrahl
- 6b: zweiter ausgehender Lichtstrahl
- 7: Gehäuse
- 7a: Längsöffnung
- 7b: Queröffnung
- 8: Sensorgehäuse
- 9: Tubus
- 10: Lichtstrahl aus Längsrichtung
- 11: Lichtstrahl aus Querrichtung
- 12a: erste Nebenlichtquelle in Längsrichtung
- 12a': zweite Nebenlichtquelle in Längsrichtung
- 12b: erste Nebenlichtquelle in Querrichtung
- 12b': zweite Nebenlichtquelle in Querrichtung
- 13: Neigungsgeber
- 14: erstes Fahrwerksvermessungssystem
- 15: Messköpfe
- 16A-D: Messeinheiten/Referenzeinheiten
- 17: Halterung
- 18: Gegengewicht
- 19: Spannmittel
- 20: zweites Fahrwerksvermessungssystem
- 21A-D: Messköpfe
- 22: Messwertaufnehmer

## Patentansprüche

1. Mess- bzw. Referenzeinheit zum Ermitteln von Winkelstellungen der Räder eines Kfz-Fahrwerks oder von Messköpfen zueinander bei einem berührungslos messenden Fahrwerkvermessungssystem, umfassend
einen optischen Sensor (1), insbesondere eine Zeilen- oder Flächen-CCD oder einen Zeilen- oder Flächen-CMOS-Sensor, mit einer zugehörigen Optik (2); und
wenigstens eine Lichtquelle (4), insbesondere eine Infrarot-LED, zum Abstrahlen wenigstens eines Lichtstrahls (6) für die Radstellungsmessung in wenigstens einer in Fahrzeuglängs- bzw, Querrichtung gegenüberliegenden Mess- bzw. Referenzeinheit;
wobei vor dem optischen Sensor (1) und der Lichtquelle (4) ein Strahlteiler (5) angeordnet ist, der so ausgebildet ist, dass er einfallende Lichtstrahlen (10, 11) aus wenigstens zwei unterschiedlichen Richtungen auf den optischen Sensor (1) leitet und dass ein von der Lichtquelle (4) ausgehender Lichtstrahl (6) in zwei Teilstrahlen (61, 62) mit unterschiedlichen Richtungen aufteilbar ist;
wobei der optische Sensor (1) und die Optik (2) in einem vom Umgebungslicht abgeschatteten Sensorgehäuse (8) angeordnet sind, das eine Sichtöffung für den Strahlengang aufweist, und
wobei die Lichtquelle (4) oberhalb oder unterhalb der Sichtöffung des Sensorgehäuses (8) angeordnet ist.

2. Mess- bzw. Referenzeinheit zum Ermitteln von Winkelstellungen der Räder eines Kfz-Fahrwerks oder von Messköpfen zueinander bei einem berührungslos messenden Fahrwerkvermessungssystem, umfassend
einen optischen Sensor (1), insbesondere eine Zeilen- oder Flächen-CCD oder einen Zeilen- oder Flächen-CMOS-Sensor, mit einer zugehörigen Optik (2); und
eine quer zum optischen Sensor (1) ausgerichtete erste Lichtquelle (4b), insbesondere eine Infrarot-LED, zum Abstrahlen wenigstens eines Lichtstrahls (6b) für die Radstellungsmessung in einer dem optischen Sensor (1) in Querrichtung gegenüberliegenden Mess- bzw. Referenzeinheit;
wobei vor dem optischen Sensor (1) ein Strahlteiler (5) angeordnet ist, der so ausgebildet ist, dass er einfallende Lichtstrahlen (10, 11) aus wenigstens zwei unterschiedlichen Richtungen auf den optischen Sensor (1) leitet;
wobei wenigstens eine längs zum optischen Sensor (1) ausgerichtete zweite Lichtquelle (4a), insbesondere eine Infrarot-LED, zum Abstrahlen wenigstens eines Lichtstrahls (6a) für die Radstellungsmessung in einer dem optischen Sensor (1) in Längsrichtung gegenüberliegenden Mess- bzw. Referenzeinheit vorgesehen ist; und
wobei die erste Lichtquelle (4a) und die zweite Lichtquelle (4b) nach dem Strahlteiler (5) und außerhalb des Strahlengangs der auf den optischen Sensor (1) einfallenden Lichtstrahlen (10,11) angeordnet sind.

3. Mess- bzw. Referenzeinheit nach Anspruch 1 oder 2,
**dadurch gekennzeichnet,**
**dass** wenigstens eine weitere längs zum optischen Sensor (1) ausgerichtete Nebenlichtquelle (12a, 12a'), insbesondere eine Infrarot-LED vorgesehen ist, die einen Lichtstrahl für die Entfernungsmessung in einer dem optischen Sensor (1) in Längsrichtung gegenüberliegenden Mess- bzw. Referenzeinheit ausstrahlt;
**dass** wenigstens eine weitere quer zum optischen Sensor (1) ausgerichtete Nebenlichtquelle (12b, 12b'), insbesondere einer Infrarot-LED vorgesehen ist, die einen Lichtstrahl für die Entfernungsmessung in einer dem optischen Sensor (1) in Querrichtung gegenüberliegenden Mess- bzw. Referenzeinheit ausstrahlt, und
**dass** die weiteren Lichtquellen (12a, 12a', 12b, 12b') nach dem Strahlteiler (5) und außerhalb des Strahlengangs der auf den optischen Sensor (1) einfallenden Lichtstrahlen (10, 11) angeordnet sind.

4. Mess- bzw. Referenzeinheit nach einem der Ansprüche 1 bis 3, **dadurch gekennzeichnet, dass** die Mess- bzw. Referenzeinheit (16A - 16D) von einem Gehäuse (7) mit einer Längsöffnung und mit einer Queröffnung umgeben ist.

5. Mess- bzw. Referenzeinheit nach Anspruch 4,
**dadurch gekennzeichnet, dass**
die erste Lichtquelle (4a), die zweite Lichtquelle (4b) sowie die Nebenlichtquellen (12a, 12a', 12b, 12b') an oder bei dem Gehäuse (7) angeordnet sind.

6. Mess- bzw, Referenzeinheit nach einem der Ansprüche 1 bis 5,
**dadurch gekennzeichnet, dass**
der Strahlteiler (5) als halbdurchlässiger Spiegel oder als Teilerwürfel ausgebildet ist.

7. Mess- bzw. Referenzeinheit nach einem der Ansprüche 1 bis 6,
**dadurch gekennzeichnet, dass**
der Strahlteiler (5) in einem Winkel von 45 Grad zum optischen Sensor (1) angeordnet ist.

8. Mess- bzw. Referenzeinheit nach einem der Ansprüche 4 bis 7,
**dadurch gekennzeichnet, dass**
die Längsöffnung und die Queröffnung des Gehäuses (7) zur Reduzierung von Fremd- oder Störlichteinflüssen mit jeweils einem Tubus (9) versehen sind.

9. Mess- bzw, Referenzeinheit nach Anspruch 8,
**dadurch gekennzeichnet, dass**
jeder Tubus am einem Ende mit einem optischen Filter (3), insbesondere mit einem Tageslichtfilter verschlossen ist.

10. Mess- bzw. Referenzeinheit nach einem der Ansprüche 1 bis 9,
**dadurch gekennzeichnet, dass**
die Öffnung des optisch abgeschatteten Teilbereichs (8) mit einem optischen Filter (3), insbesondere mit einem Tageslichtfilter versehen ist.

11. Mess- bzw. Referenzeinheit nach einem der Ansprüche 4 bis 10.
**dadurch gekennzeichnet, dass**
im Gehäuse (7) ein zusätzlicher einachsiger Neigungsgeber (13) integriert ist, der den Verkippungswinkel des optischen Sensors (1) zur Senkrechten in Querrichtung misst.

12. Mess- bzw. Referenzeinheit nach einem der Ansprüche 4 bis 10,
**dadurch gekennzeichnet, dass**
im Gehäuse (7) ein zusätzlicher zweiachsiger Neigungsgeber (13) integriert ist, der den Verkippungswinkel des optischen Sensors (1) zur Senkrechten in Querrichtung und in Längsrichtung misst.

13. Mess- bzw. Referenzeinheit nach einem der Ansprüche 4 bis 10,
**dadurch gekennzeichnet, dass**
im Gehäuse (7) zwei einachsige Neigungsgeber integriert sind, die in ihrer Messrichtung um 90° zueinander gedreht sind und die den Verkippungswinkel des optischen Sensors (1) zur Senkrechten in Querrichtung und in Längsrichtung messen.

14. Messkopf einer Fahrwerkvermessungsvorrichtung (15) mit den folgenden Merkmalen:
eine Halterung(17);
Spannmittel (19) zum Befestigen der Halterung (17) an einem Fahrzeugrad;
eine an einem Ausleger befestigte Messeinheit (16A - 16D) nach einem der vorhergehenden Ansprüche; sowie
ein gegenüber der Messeinheit (16A-16D) angeordnetes Gegengewicht (18).

15. Fahrwerksvermessungssystem (14) mit vier einander jeweils gegenüberliegenden Messköpfen (15) nach Anspruch 14, die jeweils an einem Fahrzeugrad befestigt sind.

16. Berührungslos messender Messkopf (21A - 21 D) mit den folgenden Merkmalen:
einen berührungslos messenden Messwertaufnehmer (22) zur Anordnung neben einem Fahrzeugrad, wobei der Messwertaufnehmer (22) wenigstens eine Messkamera zum Erfassen eines charakteristischen Merkmals des Rads oder eines am Rad angebrachten Messtargets zur Bestimmung der räumlichen Lage des Rads gegenüber dem Messwertaufnehmer (22) aufweist;
eine in einer definierten Lage zu dem berührungslos messenden Messwertaufnehmer (22) angeordnete Referenzeinheit (16A - 16D) nach einem der Ansprüche 1 bis 13 zur Bestimmung der Winkellagen der Messköpfe (21A - 21 D) bzw. Messwertaufnehmer (22) zueinander.

17. Berührungslos messender Messkopf nach Anspruch 16,
**dadurch gekennzeichnet, dass**
der berührungslose Messwertaufnehmer (22) zwei zueinander leicht schräg montierte Messkameras aufweist, die von einer Vielzahl von Infrarot-LEDs umgeben sind.

18. Fahrwerksvermessungssystem (20) mit vier einander jeweils gegenüberliegenden berührungslos messenden Messköpfen (21A-21D) nach Anspruch 16 oder 17.
